# EUROPÄISCHE PATENTSCHRIFT

(11) **EP 3 856 705 B1**
(45) Veröffentlichungstag und Bekanntmachung des Hinweises auf die Patenterteilung: **29.03.2023**
(21) Anmeldenummer: 19782898.1
(22) Anmeldetag: 17.09.2019
(51) Int. Cl.: C05C 9/00

(54) **GRANULATE AUF BASIS VON HARNSTOFF UND KALZINIERTEM POLYHALIT**
GRANULES BASED ON UREA AND CALCINED POLYHALITE
GRANULÉS À BASE D'URÉE ET DE POLYHALITE CALCINÉE

(30) Priorität: 25.09.2018 DE 102018007539
(43) Veröffentlichungstag der Anmeldung: 04.08.2021
(73) Patentinhaber: K+S Aktiengesellschaft, 34131 Kassel (DE)
(72) Erfinder: SCHERR, David, 36088 Hünfeld (DE); BAUCKE, Guido, 36277 Schenklengsfeld OT Wippershain (DE); DRESSEL, Stefan, 34128 Kassel (DE); THENERT, Stefan, 36266 Heringen (DE); DIETRICH, Armin, 37299 Weißenborn (DE)
(74) Vertreter: Reitstötter Kinzebach
(86) Internationale Anmeldenummer: PCT/DE2019/000240
(87) Internationale Veröffentlichungsnummer: WO 2020/064036

(56) Entgegenhaltungen:
- CN-A- 101 575 243
- GB-A- 2 544 340
- US-A- 4 026 695
- P. MALINOWSKI, J. GLOWINSKI, A. BISKUPSKI: "Preparation methods of calcium sulphate and urea adduct", POLISH JOURNAL OF CHEMICAL TECHNOLOGY, Bd. 9, Nr. 4, 1. Januar 2007 (2007-01-01), Seiten 111-114, XP055138539, DOI: 10.2478/v10026-007-0102-z
- WHITTAKER C W ET AL: "Reaction between urea and gypsum", INDUS ENG CHEM; INDUSTRIAL AND ENGINEERING CHEMISTRY, Bd. 25, Nr. 11, November 1933 (1933-11), Seiten 1280-1282, XP002796403, AMERICAN CHEMICAL SOCIETY, WASHINGTON, DC, UNITED STATES
- DATABASE COMPENDEX [Online] ENGINEERING INFORMATION, INC., NEW YORK, NY, US; November 1933 (1933-11), WHITTAKER C W ET AL: "Reaction between urea and gypsum", Database accession no. EIX19330007937 & WHITTAKER C W ET AL: "Reaction between urea and gypsum", INDUS ENG CHEM; INDUSTRIAL AND ENGINEERING CHEMISTRY NOV 1933 AMERICAN CHEMICAL SOCIETY, WASHINGTON, DC, UNITED STATES, vol. 25, no. 11, November 1933 (1933-11), pages 1280-1282,

## Beschreibung

Die vorliegende Erfindung betrifft Düngemittelgranulate, enthaltend Magnesium, Calcium, Kalium, Sulfat und Harnstoff. Die vorliegende Verbindung betrifft auch ein Verfahren zur Herstellung der erfindungsgemäßen Düngemittelgranulate sowie die Verwendung der Düngemittelgranulate als Düngemittel oder in Düngemittelzusammensetzungen.

Obwohl Magnesium als achthäufigstes Element zu etwa 1,94 % in der Erdkruste vorhanden ist, weisen Böden oft einen Mangel an Magnesium auf. Deshalb finden Magnesiumsalze als Düngemittel oder Düngemittelzusätze eine breite Verwendung. Insbesondere wird Magnesiumsulfat, häufig in Form des Monohydrats, des 5/4-Hydrats oder des Heptahydrats (Bittersalz), als Düngemittel oder Düngemittelzusatz eingesetzt. Hierbei wird typischerweise Magnesiumsulfat in Form von Magnesiumsulfat-haltigen Granulaten eingesetzt, die gegebenenfalls weitere Makronährstoffe wie Kalium, Phosphor oder Stickstoff sowie gegebenenfalls Mikronährstoffe wie Mangan, Zink, Kupfer, Eisen, Molybdän oder Bor enthalten. Diese und gegebenenfalls weitere Makro- und Mikronährstoffe sind bevorzugt, um ein vollständiges Nährstoffprofil bereitzustellen.

Häufig möchte man zur Düngung Magnesiumsulfat gemeinsam mit Harnstoff verwenden. So beschreibt B. von Rheinbaben, Fertilizer Research 11 (1987), dass der gemeinsame Einsatz von Magnesiumsulfat-Monohydrat und Harnstoff zu einer Verringerung des Stickstoffverlustes führt. Jedoch sind dem gemeinsamen Einsatz von Magnesium und Stickstoff Grenzen gesetzt. So sind Feststoffmischungen von Magnesiumsulfat-Granulaten und Harnstoff nicht lagerstabil. Häufig kommt es schon nach kurzer Zeit zu einer Reaktion der beiden Mischungspartner mit der umgebenden Luftfeuchtigkeit, bei der sich pastöse Massen bilden, die zudem leicht zerfließen und daher schlecht zu handhaben sind. Diese lassen sich nicht mehr als Düngemittel in fester Form ausbringen. Selbst bei Lagerung im Trockenen wird nach einiger Zeit ein Verklumpen der Mischung beobachtet. Diese Probleme treten insbesondere bei Granulaten mit einem hohen Anteil an Magnesium auf.

Die WO 2013/098367 schlägt zur Lösung dieser Problematik vor, Magnesiumsulfat und Harnstoff in Form einer Komplexverbindung [MgSO₄ • m CO(NH₂)₂ • n H₂O], worin m im Bereich von 0,9 bis 1,1 und n im Bereich von 2,9 bis 3,1 liegen, einzusetzen, wobei die dort beschriebenen Zusammensetzungen wenig oder kein freies MgSO₄ und weniger als 10 Gew.-%, ungebundenen Harnstoff enthalten dürfen. Die Herstellung erfolgt durch Umsetzung von kalziniertem Magnesiumsulfat (CMS) mit Harnstoff.

Einen ähnlichen Lösungsansatz verfolgt die WO 2014/096372, wobei dort Zusammensetzungen beschrieben werden, die im Wesentlichen aus einer Magnesiumsulfat-Harnstoff-Komplexverbindung der Formel [MgSO₄ • m CO(NH₂)₂ • p H₂O], worin m im Bereich von 0,9 bis 1,1 und p im Bereich von 1,9 bis 2,1 liegen, oder einem Gemisch davon mit dem entsprechenden Trihydrat (p = 2,9 - 3,1) bestehen. GB 2 544 340 A offenbart ein Düngemittelgranulat, enthaltend einen Harnstoffkern und eine Polyhalitumhüllung.

Nachteilig ist, dass die Komplexverbindungen zuvor hergestellt werden müssen und die Reaktionsmassen zerkleinert werden müssen. Kugelförmige Granulate lassen sich so nicht herstellen. Außerdem weisen diese Zusammensetzungen nur einen geringen Stickstoffgehalt auf. Von Nachteil ist außerdem, dass zur Herstellung als Ausgangsmaterial CMS benötigt wird, das erst aufwändig durch Entwässerung von Kieserit bei 450 C hergestellt werden muss. Außerdem weisen derartige Produkte einen hohen Anteil an feinteiligem Material auf, was für eine Reihe von Anwendungen von Nachteil ist.

Es ist daher Aufgabe der vorliegenden Erfindung Düngemittelgranulate bereitzustellen, die die aus dem Stand der Technik bekannten Nachteile nicht aufweisen. Insbesondere sollten die Granulate gute mechanische Eigenschaften aufweisen, insbesondere einen geringen Abrieb sowie gute Bruchfestigkeiten. Ebenso sollten die Granulate eine verbesserte Empfindlichkeit gegenüber der Einwirkung von Luftfeuchtigkeit aufweisen. Weiterhin sollen die Granulate eine verringerte Neigung zu NH₃-Emissionen aufweisen.

Die Düngemittelgranulate sollten sich in einem einfachen und günstigen Verfahren, vorzugsweise unter Verwendung eines Polyhalit-basierten Ausgangsmaterials herstellen lassen, wobei vorzugsweise auf Bindemittel verzichtet werden kann.

Es wurde überraschenderweise gefunden, dass Düngemittelgranulate, welche Magnesium, Calcium, Kalium, Sulfat und Harnstoff enthalten, besonders vorteilhafte Eigenschaften, insbesondere besonders vorteilhafte mechanische Eigenschaften, aufweisen, sofern das Granulat
Harnstoff, gerechnet als Stickstoff, in einer Menge von 11,0 bis 33,0 Gew.-%, insbesondere 20,0 bis 28,0 Gew.-%,
Magnesium in einer Menge von 1,0 bis 3,5 Gew.-%, insbesondere 1,4 bis 2,5 Gew.-%, Calcium in einer Menge von 3,5 bis 9,0 Gew.-%, insbesondere 4,5 bis 6,5 Gew.-%, Kalium in einer Menge von 3,4 bis 9,0 Gew.-% und insbesondere 4,0 bis 6,0. Gew.-%,
Sulfat, gerechnet als elementarer Schwefel, in einer Menge von 5,5 bis 15,0 Gew.-%, insbesondere 6,5 bis 10,5 Gew.-%, jeweils bezogen auf das Gesamtgewicht des Granulats, enthält,
wobei wenigstens ein Teil des Calciums, des Harnstoffs und des Sulfats in Form der kristallinen Phase der Formel (I)

   CaSO_{4*}4 CO(NH₂)₂ (I)
vorliegt. Dementsprechend betrifft die vorliegende Erfindung derartige Düngemittelgranulate.

Des Weiteren betrifft die vorliegende Erfindung auch ein Verfahren zur Herstellung der erfindungsgemäßen Düngemittelgranulate, bei dem ein Salzgemisch enthaltend kalziniertes Polyhalit und Harnstoff unter Zusatz von Wasser einer Aufbauagglomeration unterworfen wird.

Außerdem betrifft die vorliegende Verbindung auch die Verwendung eines erfindungsgemäßen Düngemittelgranulats als Düngemittel oder in Düngemittelzusammensetzungen sowie ein Verfahren zum Düngen von Böden, umfassend das Aufbringen eines erfindungsgemäßen Düngemittelgranulats auf den zu düngenden Boden.

Die Erfindung ist mit einer Reihe von Vorteilen verbunden. Die erfindungsgemäßen Granulate weisen gute mechanische Eigenschaften, beispielsweise einen geringen Abrieb und/oder gute Bruchfestigkeiten auf. Dies gilt sowohl insbesondere für Granulate mit Stickstoffgehalten von wenigstens 11,0 Gew.-%, insbesondere wenigstens 20,0 Gew.-%, gerechnet als Stickstoff und bezogen auf das Gesamtgewicht des Granulats. Dies gilt ebenso insbesondere für Granulate mit einem Masseverhältnis von Stickstoff zu Schwefel von wenigstens 0,8 : 1, insbesondere wenigstens 1 : 1.

Die erfindungsgemäßen Granulate zeigen eine reduzierte Wasserempfindlichkeit, insbesondere bei Luftfeuchtigkeit, auf. Anders als Mischungen von Harnstoff und bekannten Magnesiumsulfatdüngern zeigen die erfindungsgemäßen Granulate auch bei entsprechenden Stickstoffgehalten keine signifikante Neigung zum Zerfließen oder zur Bildung von Nestern. Die erfindungsgemäßen Granulate sollten zudem nach der Düngung eine verringerte Neigung zur NH₃-Emission zeigen.

Die erfindungsgemäßen Granulate lassen sich in einfacher Weise herstellen und sind auch einer großtechnischen Herstellung zugänglich. Außerdem lassen Sie sich aus leicht verfügbaren Ausgangsmaterialien wie Harnstoff, synthetischem Harnstoff und/ oder Polyhalit herstellen. Die erfindungsgemäßen Granulate lassen sich auch ohne die Verwendung von kostspieligen organischen Bindemitteln herstellen. Das erfindungsgemäße Verfahren erlaubt es, bergmännisch abgebautes Polyhalit in einfacher Weise zu Granulaten zu verarbeiten, ohne dass aufwendige Lösungsverfahren oder Extraktionsverfahren notwendig sind.

Die erfindungsgemäßen Granulate sind insbesondere kugelförmig. Der Begriff "kugelförmig" bedeutet, dass die Körner bzw. Granulatkörner eine regelmäßige Gestalt aufweisen, die näherungsweise einer Kugel entspricht, wobei die maximale Ausdehnung des Korns in eine Raumrichtung in der Regel nicht mehr als 30 % vom Volumenäquivalentdurchmesser des jeweiligen Korns abweichen. Der Volumenäquivalentdurchmesser ist derjenige Durchmesser eines Korns, den eine geometrische Kugel mit identischem Volumen aufweisen würde.

Die Formeln "CO(NH₂)₂" und "NH₂-C(=O)-NH₂" werden synonym verwendet und stehen für "Harnstoff".

Die erfindungsgemäßen Düngemittelgranulate enthalten Magnesium, Calcium, Kalium, Sulfat und Harnstoff, wobei wenigstens ein Teil des Calciums, des Harnstoffs und des Sulfats in Form der kristallinen Phase der Formel (I) vorliegt.

In den erfindungsgemäßen Granulaten kann die kristalline Phase der Formel (I) mittels Röntgenpulverdiffraktometrie an einer gemahlenen Probe des Granulats anhand ihrer charakteristischen Reflexe nachgewiesen werden. So weist die kristalline Phase der Formel (I) in einem bei 25 °C aufgenommenen Röntgenpulverdiffraktogramm (Cu-K_{α}-Strahlung: λ = 1.5413 Å) wenigstens 3 und insbesondere wenigstens 5 und speziell wenigstens 7 oder alle Reflexe bei den in der folgenden Tabelle 1 angegebenen d-Werten (Netzebenenabstände) auf. Vorzugsweise weist ein solches Röntgenpulverdiffraktogramm wenigstens 3, insbesondere wenigsten 5 und speziell wenigstens 7 derjenigen Reflexe auf, deren relative Intensität größer 8 %, bezogen auf die Intensität des stärksten Peaks (100 % rel. Intensität) ist. In Tabelle 1 sind die charakteristischen Reflexe der kristallinen Phase der Formel (I) als Netzebenenabstände d (in Angström) angegeben, die sich aus der Bragg'schen Beziehung 2θ-Werten berechnen lassen.

**Tabelle 1: d-Werte der Phase der Formel (I)**

| **Phase** | **d-Wert (Å)** | **Rel. Intensität (%)**¹ |
|---|---|---|
| CaSO_{4 *} 4 CO(NH₂)_{2'} | **7,39** | **100** |
| | **7,30** | **83** |
| | **3,38** | **56** |
| | 3,20 | 54 |
| | 3,80 | 23 |
| | 3,70 | 22 |
| | 3,64 | 19 |

| | | |
|---|---|---|
| * Typischerweise werden die drei Signale (entsprechend der angegebenen d-Werte) der höchsten Intensität immer beobachtet. 1 Die relativen Intensitäten sind lediglich als Orientierung zu verstehen und auf den intensivsten Peak (100 % Peak) bezogen. | | |

Der Gehalt an kristalliner Phase der Formel (I) in den erfindungsgemäßen Düngemittelgranulaten beträgt häufig wenigstens 1 Gew.-%, bezogen auf die Gesamtmasse der Düngemittelgranulate und liegt insbesondere im Bereich von 1 bis 50 Gew.-%, insbesondere 1 bis 30 Gew.-%, bezogen auf die Gesamtmasse der Düngemittelgranulate.

Für die Eigenschaften der erfindungsgemäßen Düngemittelgranulate hat es sich als günstig erwiesen, wenn es Sulfat und Harnstoff in einem solchen Mengenverhältnis enthält, dass das Massenverhältnis von Stickstoff zu Schwefel, im Bereich 0,8 : 1 bis 5:1, insbesondere im Bereich von 1 : 1 bis 4,5 : 1, speziell im Bereich von 2 : 1 bis 4 : 1 liegt.

Bevorzugt liegen wenigstens 80 % des Magnesiums, Calciums und Kaliums in Form sulfatischer Salze vor. Zu diesen zählen insbesondere MgSO₄, CaSO₄ und K₂SO₄, welche gegebenenfalls in einer entsprechenden Harnstoff-Phase oder Hydrat-Phase vorliegen können, sowie auch Polyhalit (K₂Ca₂Mg[SO₄]_{4 *}·2 H₂O). Auch die Salze der Formel (I) zählen als sulfatische Salze. Insbesondere liegen wenigstens 80%, speziell wenigstens 90% des Magnesiums, Calciums und Kaliums in Form sulfatischer Salze vor.

In den erfindungsgemäßen Düngemittelgranulaten liegt das Magnesium typischerweise zumindest teilweise in Form von Polyhalit (K₂Ca₂Mg[SO₄]_{4 *}·2 H₂O) vor. Insbesondere liegen wenigstens 50 Gew.-%, besonders bevorzugt wenigstens 80 Gew.-% des Magnesiums, gerechnet als elementares Magnesium, bezogen auf die Gesamtmenge des im Düngemittelgranulat enthaltenen Magnesiums, in Form von Polyhalit vor.

Weitere Magnesium-haltige Bestandteile sind von Polyhalit verschiedene Magnesiumsalze, insbesondere Magnesiumsulfat, zum Beispiel ein oder mehrere Magnesiumsulfat-Hydrate wie Magnesiumsulfat-Monohydrat und Magnesiumsulfat-5/4-Hydrat. Der Anteil an Magnesiumsalzen, die von Polyhalit verschieden sind, wird jedoch erfahrungsgemäß nicht mehr als 50 Gew.-%, insbesondere nicht mehr als 20 Gew.-%, gerechnet als elementares Magnesium und bezogen auf die Gesamtmenge des im Düngemittelgranulat enthaltenen Magnesiums, betragen.

In den erfindungsgemäßen Düngemittelgranulaten liegt vorzugsweise ein geringer Teil des Magnesiums, gerechnet als elementares Magnesium, insbesondere 1 bis 12 Gew.- %, und speziell 2 bis 8 Gew.-%, bezogen auf die Gesamtmenge des in den Granulaten enthaltenen Magnesiums, als wasserunlösliches Magnesium, insbesondere in Form von wasserunlöslichem Magnesiumoxid, vor.

In den erfindungsgemäßen Düngemittelgranulaten ist häufig ein Teil des Harnstoffs nicht in Form der Phase der Formel (I) enthalten. Der nicht in der Phase der Formel (I) vorliegende Harnstoff liegt typischerweise in freier, d.h. in ungebundener Form, vor, wobei geringe Mengen auch in Form anderer, von Formel (I) verschiedener kristalliner Harnstoff-Phasen vorliegen kann.

Der Anteil an freiem Harnstoff wird in der Regel 99 Gew.-% des in den Granulaten enthaltenen Harnstoffs nicht überschreiten und beträgt in der Regel mindestens 50 Gew.- %. Der freie Harnstoff kann in den Granalien in gleichmäßig verteilter Form vorliegen. Vorzugsweise weisen die Granulatpartikel eine Konglomerat-Struktur auf. In dieser Konglomeratstruktur liegt ein Teil des in den Granulat-Partikeln enthaltenen Harnstoffs in Form von Harnstoffpartikeln, vorzugsweise kristallinen Harnstoffpartikeln vor, die in eine Matrix eingebettet sind, welche sulfatische Salze des Magnesiums, des Calciums und des Kaliums enthält. Diese Harnstoffpartikel weisen typischerweise Durchmesser im Bereich von 0,01 bis 0,5 mm auf.

Bei einem 3:1 Stickstoff:Schwefel-Verhältnis sind bei einem 1 %igen Massenanteil der Phase der Formel I rund 1,04 Gew.-% des gesamten Sulfates, bei einem 5 %igen Massenanteil der Phase der Formel I rund 5,2 Gew.-% des gesamten Sulfats, bei einem 30 %igen Massenanteil der Phase der Formel I rund 31,2 % des gesamten Sulfats und bei einem 50 %igen Massenanteil der der Phase der Formel (I) rund 51,9 Gew.-% des gesamten Sulfates in der Phase der Formel (I) enthalten. D.h. in der Regel sind wenigstens 1 Gew.-% und maximal 52 Gew.-% des gesamten Sulfats in der Phase der Formel I enthalten.

Dementsprechend liegen bei einem 3:1 Stickstoff:Schwefel-Verhältnis in der Regel bis zu 99 Gew.-%, jedoch nicht weniger als 48 Gew.-%, bezogen auf die Gesamtmenge des im Düngemittelgranulat enthaltenen Sulfats, nicht in Form der Phase der Formel (I) vor, sondern unter anderem als Polyhalit.

Die in den erfindungsgemäßen Düngemittelgranulaten enthaltenen Bestandteile können in an sich bekannter Weise nach gängigen analytischen Verfahren, beispielsweise mittels Elementaranalyse, beispielsweise nassanalytisch oder mittels Atomemissionsspektroskopie (z.B. mittels ICP-OES), bestimmt werden. Kristalline Bestandteile, die von der Phase der Formel (I) verschieden sind, können ebenfalls mittels Röntgenpulverdiffraktometrie nachgeweisen werden. So können beispielsweise Bestandteile wie ungebundener Harnstoff und Magnesiumsulfat-Monohydrat in einem bei 25 °C (Cu-K_{α}-Strahlung: λ = 1.5413 Ä) aufgenommenem Röntgenpulverdiffraktogramm der Zusammensetzung anhand der in der folgenden Tabelle 2 angegebenen Reflexe identifiziert werden, wobei zur Identifikation typischerweise wenigstens 3 der angegebenen d-Werte mit einer relativen Intensität größer 10 % herangezogen werden.

**Tabelle 2: d-Werte der weiteren Bestandteile der Düngemittelgranulate**

| **Komponente** | **d-Wert (Å)** | **Rel. Intensität (%)¹** |
|---|---|---|
| **Harnstoff** | 4,010 | 100 |
| | 3,620 | 25 |
| | 3,040 | 30 |
| | 2,528 | 12 |
| | 2,422 | 10 |
| **MgSO₄** • **H₂O** | 3,405 | 100 |
| | 4,815 | 75 |
| | 3,351 | 70 |
| | 3,313 | 70 |
| **MgSO₄ • 5/4 H₂O** | 3,370 | 100 |
| | 3,430 | 60 |
| | 3,230 | 50 |
| | 4,850 | 40 |
| | 3,170 | 40 |
| | 2,570 | 15 |

| | | |
|---|---|---|
| * Typischerweise werden die drei Signale (entsprechend der angegebenen d-Werte) der höchsten Intensität immer beobachtet. 1 Die relativen Intensitäten sind lediglich als Orientierung zu verstehen und auf den intensivsten Peak (100 % Peak) bezogen. | | |

Die relativen Anteile der jeweiligen kristallinen Bestandteile können mittels Röntgenpulverdiffraktometrie anhand von Referenzdiagrammen abgeschätzt bzw. berechnet werden.

Bevorzugt enthalten die Düngemittelgranulate Magnesium, Calcium, Kalium, Sulfat und Harnstoff sowie gegebenenfalls Wasser, wobei die Gesamtmenge an Magnesium, Calcium, Kalium, Sulfat und Harnstoff in der Regel wenigstens 80 Gew.-%, beispielsweise 80 bis 100 Gew.-%, insbesondere 90 bis 100 Gew.-%, und speziell 95 bis 100 Gew.-%, bezogen auf die Gesamtmasse des Düngemittelgranulats, abzüglich des etwaig darin enthaltenen Wassers, ausmacht.

Üblicherweise enthalten die Düngemittelgranulate neben Magnesium, Calcium, Kalium, Sulfat und Harnstoff außerdem Wasser, wobei zumindest ein Teil des Wassers in Form von Kristallwasser im Düngemittelgranulat gebunden vorliegt, beispielsweise als Kristallwasser im Magnesiumsulfat. Der Gehalt an freiem Wasser, also nicht als Kristallwasser gebundenes Wasser, des Düngemittelgranulats kann in an sich bekannter Weise bestimmt werden, beispielsweise durch Karl-Fischer Titration. Er liegt typischerweise im Bereich von 0,1 des 3 Gew.-%, bezogen auf die Gesamtmasse des Düngemittelgranulats.

In einer bevorzugten Ausführungsform können die erfindungsgemäßen Düngemittelgranulate auch Mikronährstoffe enthalten. Diese Mikronährstoffe können auch als Spurenelemente bezeichnet werden. Als Mikronährstoffe zählen insbesondere Bor, Mangan, Zink, Kupfer, Eisen und Molybdän. Die Gesamtmenge an Mikronährstoffen liegt, sofern erwünscht, vorzugsweise im Bereich von 0,01 bis 10 Gew.-%, insbesondere im Bereich von 0,1 bis 5,0 Gew.-%, bezogen auf die Gesamtmasse des Düngemittelgranulats und gerechnet als Elemente.

Bor ist vorzugsweise als Calcium-Natrium-Borat, beispielsweise in Form von Ulexit, Natriumborat, Kaliumborat oder Borsäure enthalten. Die Elemente Mangan, Zink, Kupfer, Eisen und Molybdän sind in den Granulaten typischerweise in Form ihrer Salze oder Komplexverbindungen enthalten. Mangan, Kupfer und Zink sind vorzugsweise in Form ihrer Sulfate enthalten. Kupfer und Eisen können auch in Form von Chelaten, beispielsweise mit EDTA, enthalten sein. Molybdän ist vorzugsweise als Natrium- oder Ammoniummolybdat oder als Mischung davon enthalten. Typischerweise wird der Anteil an von Bor verschiedenen Mikronährstoffen, gerechnet in ihrer elementaren Form, 3 Gew.-%, bezogen auf die Gesamtmasse der Bestandteile des erfindungsgemäß verwendeten Granulats, nicht überschreiten. Der Gehalt an Bor, gerechnet als B₂O₃ wird in der Regel 10 Gew.-%, insbesondere 5 Gew.-% nicht überschreiten und liegt typischerweise, sofern enthalten, im Bereich von 0,01 bis 10 Gew.-%, insbesondere 0,1 bis 5 Gew.-%, bezogen auf die Gesamtmasse der Bestandteile der erfindungsgemäßen Düngemittelgranulate. Weiterhin können die erfindungsgemäßen Düngemittel auch Biostimulantien (z.B. Algen- und Pflanzenextrakte, Produkte auf mineralischer und/oder mikrobieller Basis) enthalten.

Vorzugsweise weisen die erfindungsgemäßen Düngemittelgranulate einen geringen Anteil von Granalien mit einer Partikelgröße bzw. Korngröße unterhalb 1 mm auf. Ins-besondere beträgt der Anteil an Granalien mit einer Korngröße unterhalb 1 mm weniger als 10 Gew.-%, insbesondere weniger als 5 Gew.-%. Häufig weisen wenigstens 80 Gew.-% und speziell wenigstens 90 Gew.-% der Granalien eine Korngröße von maximal 5 mm auf. Vorzugsweise liegt die Korngröße der Granalien zu wenigstens 70 Gew.-%, insbesondere zu wenigstens 80 Gew.-% und speziell zu wenigstens 90 Gew.- % im Bereich von 2 bis 5 mm. Die Düngemittelgranulate können aber auch in Form eines sogenannten Mikrogranulats vorliegen. In derartigen Mikrogranulaten weisen in der Regel wenigstens 80 Gew.-% und speziell wenigstens 90 Gew.-% der Granalien eine Korngröße von maximal 3 mm, insbesondere maximal 2,5 mm auf. Vorzugsweise liegt die Korngröße der Granalien in Mikrogranulaten zu wenigstens 70 Gew.-%, insbesondere zu wenigstens 80 Gew.-% und speziell zu wenigstens 90 Gew.-% im Bereich von 0,5 bis 3 mm.

Bei den hier und im Folgenden angegebenen Partikelgrößen, die auch als Korngrößen bezeichnet werden, handelt es sich in der Regel um diejenigen Werte, wie sie mittels Siebanalyse nach DIN 66165:2016-08 bestimmt werden. Die Ermittlung der Massenanteile der jeweiligen Korngrößen bzw. Korngrößenbereiche erfolgt nach Maßgabe der DIN 66165:2016-08 durch Fraktionierung des dispersen Granulats unter Verwendung von mehreren Sieben mittels maschineller Siebung in vorkalibrierten Systemen. Sofern nichts anderes angegeben ist, sind Prozentangaben im Zusammenhang mit Partikel- bzw. Korngrößen als Angaben in Gew.-% zu verstehen. In diesem Zusammenhang bezeichnet der d90-Wert diejenige Korngröße, die von 90 Gew.-% der Granalien unterschritten wird. Der d10-Wert bezeichnet diejenige Korngröße, die von 10 Gew.-% der Granalien unterschritten wird. Der d50-Wert bezeichnet die gewichtsmittlere Korngröße des Granulats. Die Korngrößenverteilung der erfindungsgemäßen Düngemittelgranulate ist dementsprechend durch einen d10-Wert von < 1,5 mm und insbesondere von wenigstens 2 mm und einen d90-Wert von maximal 5 mm charakterisiert. Der d50-Wert der erfindungsgemäßen Düngemittelgranulate liegt in der Regel im Bereich von 2,5 bis 3,5 mm.

Weiterhin kann die Zusammensetzung auch organische Bindemittel enthalten, beispielsweise Tylose, Melasse, Gelatine, Stärke, Ligninsulfonate oder Salze von Polycarbonsäuren wie Natriumcitrat oder Kaliumcitrat oder Fettsäuresalze wie Calciumstearat. Der Anteil der organischen Bindemittel wird typischerweise 1 Gew.-% nicht überschreiten und beträgt insbesondere weniger als 0,5 Gew.-% und speziell weniger als 0,1 Gew.-%, jeweils bezogen auf die Gesamtmasse der von freien Wasser verschiedenen Bestandteile der Zusammensetzung. In einer besonders bevorzugten Ausführungsform enthält das Granulat keine organischen Bindemittel.

Die Herstellung der erfindungsgemäßen Düngemittelgranulate erfolgt erfindungsgemäß in einem Verfahren, bei dem ein Salzgemisch enthaltend kalziniertes Polyhalit und Harnstoff unter Zusatz von Wasser einer Aufbauagglomeration unterworfen wird.

Unter "kalziniertem Polyhalit" versteht man ein sulfatisches Salz bzw. Salzgemisch, das durch Kalzinierung von Polyhalit erhalten wird. Das kalzinierte Polyhalit ist auf dem Markt erhältlich oder kann in an sich bekannter Weise durch Kalzinierung von Polyhalit erhalten werden. Üblicherweise erfolgt eine solche Kalzinierung bei Temperaturen von wenigstens 440 °C, insbesondere wenigstens 460 °C und speziell wenigstens 480 °C, beispielsweise bei Temperaturen im Bereich von 440 bis 560 °C, insbesondere im Bereich von 460 bis 540 °C und speziell im Bereich von 480 bis 520 °C. Die Kalzinierung wird üblicherweise so lange durchgeführt, bis das erhaltene Material einen Glühverlust, bestimmt durch Glühverlust bei 550 °C, angelehnt an DIN EN 15935:2012, von nicht mehr als 0,2 Gew.-%, insbesondere nicht mehr als 0,1 Gew.-% aufweist. Die Kalzinierungsdauer hängt naturgemäß von der Feinheit des eingesetzten Polyhalits, der Temperatur und der Art der Kalzinierungsvorrichtung ab und kann vom Fachmann durch Routineversuche ermittelt werden. Üblicherweise liegt die Kalzinierungsdauer im Bereich von 1 bis 60 Minuten, speziell im Bereich von 10 bis 20 Minuten. Geeignete Vorrichtungen für die Kalzinierung sind unter anderem Drehrohröfen, Wirbelschichtöfen und Muffelöfen.

Unter "Polyhalit" versteht man ein Mineral, das einen Gehalt an kristallinem K₂Ca₂Mg[SO₄]_{4 *} 2 H₂O von in der Regel wenigstens 85 Gew.-%, insbesondere wenigstens 90 Gew.-% aufweist. Neben dem kristallinen K₂Ca₂Mg[SO₄]_{4 *} 2 H₂O kann Polyhalit auch in untergeordnetem Maße andere Alkali- und Erdalkalimetallsalze, insbesondere in Form der Chloride und Sulfate, enthalten. In der Regel handelt es sich bei dem für die Kalzinierung eingesetzten Polyhalit um ein Polyhalit in der auf dem Markt üblichen Qualität. Vorzugsweise ist das für die Kalzinierung eingesetzte Polyhalit ein feinteiliges Polyhalit, insbesondere ein beim Zerkleinern eines bergmännisch abgebauten Polyhalits anfallendes feinteiliges Polyhalit. Bei dem Polyhalit kann es sich aber auch um Rückgut aus einer Herstellung eines Polyhalit-haltigen Granulats handeln.

Das für die Kalzinierung eingesetzte Polyhalit weist ein Kornband auf, bei dem typischerweise wenigstens 80 Gew.-%, insbesondere wenigstens 90 Gew.-% der Salzkörner des Polyhalits eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08, aufweisen. Die mittlere Korngröße (Gewichtsmittel, d50-Wert) des Polyhalits liegt typischerweise im Bereich von 50 µm bis 1500 µm, insbesondere im Bereich von 100 µm bis 1200 µm. Der d90-Wert des Polyhalits liegt in der Regel bei maximal 2 mm, insbesondere maximal 1,5 mm und speziell maximal 1,2 mm.

Typischerweise wird ein für die Kalzinierung eingesetztes Polyhalit etwa folgende Zusammensetzung aufweisen:
Kalium: 11,0 bis 13,0 Gew.-%;
Magnesium: 3,4 bis 4,3 Gew.-%;
Calcium: 11,0 bis 13,5 Gew.-%;
Sulfat: 55,0 bis 64,0 Gew.-%; sowie
gegebenenfalls Natrium: < 2 Gew.-%;
gegebenenfalls Halogen, z.B. Chlorid: < 5 Gew.-%

Außerdem enthält das Polyhalit Kristallwasser, typischerweise in Mengen von 5,0 bis 7,0 Gew.-%. Der Kristallwassergehalt kann über den Glühverlust bei 550 °C bestimmt werden. Die Restfeuchte des Polyhalits, bedingt durch anhaftende Feuchtigkeit wird in der Regel 0,5 Gew.-%, bezogen auf das Polyhalit, nicht überschreiten und liegt typischerweise im Bereich von 0,1 bis 0,4 Gew.-%. Der Trocknungsverlust wird typischerweise in Anlehnung an DIN EN 12880:2000 bestimmt, indem man eine Probe des Polyhalits bei Temperaturen im Bereich von 105 ± 5 °C bei Umgebungsdruck bis zur Gewichtskonstanz trocknet.

Da sich das kalzinierte Polyhalit in seiner Zusammensetzung von dem zur Kalzinierung eingesetzten Polyhalit im Wesentlichen nur durch den Verlust von Kristallwasser unterscheidet, weist es dementsprechend typischerweise etwa folgende Zusammensetzung auf:
Kalium: 11,8 bis 14,0 Gew.-%;
Magnesium: 3,6 bis 4,6 Gew.-%;
Calcium: 11,8 bis 14,6 Gew.-%;
Sulfat: 59,0 bis 69,0 Gew.-%;
gegebenenfalls Natrium: < 2,5 Gew.-%;
gegebenenfalls Halogen, z.B. Chlorid: < 6 Gew.-%

Das kalzinierte Polyhalit weist in der Regel ein Kornband auf, das dem für die Kalzinierung eingesetzten Polyhalits vergleichbar ist. Dementsprechend weisen typischerweise wenigstens 80 Gew.-%, insbesondere wenigstens 90 Gew.-% der Salzkörner des kalzinierten Polyhalits, welches in der Aufbauagglomeration eingesetzt wird, eine Korngröße von maximal 2 mm, insbesondere maximal 1,5 mm und speziell maximal 1,2 mm auf und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08. Die mittlere Korngröße (Gewichtsmittel, d50-Wert) des kalzinierten Polyhalits liegt typischerweise im Bereich von 2 bis 1500 µm, insbesondere im Bereich von 3 bis 3000 µm. Der d90-Wert des kalzinierten Polyhalits liegt in der Regel bei maximal 2 mm, insbesondere maximal 0,3 mm und speziell maximal 0,2 mm.

Der Begriff "Salzgemisch" bezeichnet hier und im Folgenden die von freiem bzw. ungebundenen Wasser verschiedenen Bestandteile des Substrats, welches der Aufbauagglomeration zugeführt wird, einschließlich gebundenes Kristallwasser. Bei diesem Substrat handelt es sich um ein feinteiliges anorganisches Salz bzw. um ein Gemisch von anorganischen Salzen, wobei in diesem Sinne auch Harnstoff als Salz zu zählen ist. In der Regel besteht das Salzgemisch zu wenigstens 80 Gew.-%, insbesondere zu wenigstens 85 Gew.-% und speziell zu wenigstens 90 Gew.-%, aus kalziniertem Polyhalit und Harnstoff oder aus einem Gemisch aus kalziniertem Polyhalit und Harnstoff sowie wenigstens einem weiteren Salz. Die hier angegebenen Angaben in Gew.-% beziehen sich auf die Gesamtmasse der vom ungebundenem Wasser verschiedenen Bestandteile des der Aufbauagglomeration zugeführten Substrats.

Mögliche weitere Salze sind insbesondere Polyhalit (d.h. nicht kalziniertem Polyhalit), Kaliumsulfat, Langbeinit und Magnesiumsulfat, insbesondere in Form seiner Hydrate wie Magnesiumsulfat-Monohydrat z.B. Kieserit oder synthetisches Magnesiumsulfat-Monohydrat (SMS) oder Magnesiumsulfat-Heptahydrat (Epsomit bzw. Bittersalz). Sofern weitere Salze eingesetzt werden, werden diese vorzugsweise in feinteiliger Form eingsetzt. Unter dem Begriff "feinteilig" versteht man ein für die Herstellung von Granulaten mittels Aufbauagglomeration übliches Kornband, bei dem typischerweise wenigstens 80 Gew.-%, insbesondere wenigstens 90 Gew.-% der eingesetzten Salze eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,05 bis 1,5 mm, und speziell im Bereich von 0,1 bis 1,2 mm, bestimmt mittels Siebanalyse nach DIN 66165:2016-08, aufweisen. Die mittlere Korngröße (Gewichtsmittel, d50-Wert) der eingesetzten Salze liegt typischerweise im Bereich von 50 bis 1500 µm, insbesondere im Bereich von 100 bis 1200 µm. Der d90-Wert des im erfindungsgemäßen Verfahren eingesetzten Pressguts liegt in der Regel bei maximal 2 mm, insbesondere maximal 1,5 mm und speziell maximal 1,2 mm.

Die Zusammensetzung des in der Aufbauagglomeration eingesetzten Salzgemisches wird in der Regel so gewählt, dass seine Bruttozusammensetzung, abgesehen von Wasser, der Bruttozusammensetzung des Granulats entspricht. Typischerweise besteht das Salzgemisch dementsprechend vorzugsweise zu wenigstens 80 Gew.-% und insbesondere zu wenigstens 90 Gew.-%, z.B. aus 80 bis 100 Gew.-%, insbesondere 90 bis 100 Gew.-%, bezogen auf die Gesamtmasse des Salzgemischs, abzüglich des etwaig darin enthaltenen Wassers, aus kalziniertem Polyhalit und Harnstoff.

In einer ersten bevorzugten Ausführungsform der Erfindung besteht das zur Aufbauagglomeration eingesetzte Salzgemisch zu wenigstens 90 Gew.-%, insbesondere zu wenigstens 95 Gew.-%, und speziell zu wenigstens 99 Gew.-%, bezogen auf die Gesamtmasse der von freiem Wasser verschiedenen Bestandteile des Salzgemischs, aus kalziniertem Polyhalit sowie aus Harnstoff. Weitere, optionale Bestandteile des in dieser Ausführungsform eingesetzten Salzgemischs können die zuvor genannten weiteren Salze, sowie Mikronährstoffe oder Verunreinigungen sein.

In einer zweiten Ausführungsform der Erfindung besteht das zur Aufbauagglomeration eingesetzte Salzgemisch zu wenigstens 90 Gew.-%, insbesondere zu wenigstens 85 Gew.-%, und speziell zu wenigstens 95 Gew.-%, bezogen auf die Gesamtmasse der von freiem Wasser verschiedenen Bestandteile des Salzgemischs, aus einem Gemisch aus kalziniertem Polyhalit mit wenigstens einem weiteren sulfatischen Salz sowie aus Harnstoff. In dieser Ausführungsform wird das Massenverhältnis von kalziniertem Polyhalit zu sulfatischem Salz vorzugsweise einen Wert von 50 : 50 nicht unterschreiten und liegt insbesondere im Bereich von 50 : 50 bis 95 : 5 und speziell im Bereich von 70 : 30 bis 90 : 10. Weitere, optionale Bestandteile des in dieser Ausführungsform eingesetzten Salzgemischs können die zuvor genannten weiteren Salze, sowie Verunreinigungen und Mikronährstoffe sein.

In der zweiten Ausführungsform ist das weitere sulfatische Salz vorzugsweise unter Kaliumsulfat, Langbeinit, Polyhalit und Magnesiumsulfat oder einer Mischung davon ausgewählt. Sofern das weitere Salz Magnesiumsulfat ist, wird es vorzugsweise in Form eines seiner Hydrate, wie Magnesiumsulfat-Monohydrat z.B. Kieserit oder synthetisches Magnesiumsulfat-Monohydrat (SMS) oder Magnesiumsulfat-Heptahydrat (Epsomit bzw. Bittersalz) eingesetzt.

Der in dem für die Aufbauagglomeration eingesetzte Harnstoff kann grundsätzlich in beliebiger fester Form eingesetzt werden. Typischerweise wird man den Harnstoff in geprillter Form einsetzen. Derartige Harnstoffprills weisen in der Regel einen Gehalt an Harnstoff von wenigstens 95 Gew.-%, insbesondere wenigstens 98 Gew.-%, auf. Häufig beträgt der Stickstoffgehalt etwa 44 bis 48 Gew.-%. Die Korngröße des festen Harnstoffs in einem derartigen Prill liegt typischerweise im Bereich von 0,2 bis 3 mm, das heißt wenigstens 90 Gew.-% der Prills weisen eine Korngröße in diesem Bereich auf. Man kann aber auch den Harnstoff vor dem Einsatz in der Aufbauagglomeration aufmahlen, um eine bessere Umsetzung zu erzielen. Hierbei hat es sich als vorteilhaft erwiesen, wenn der gemahlene Harnstoff ein Kornband aufweist, bei dem typischerweise wenigstens 80 Gew.-%, insbesondere wenigstens 90 Gew.-% der Harnstoffkörner eine Korngröße von maximal 1,5 mm und speziell maximal 1,0 mm aufweisen und vorzugsweise Korngrößen im Bereich von 1 bis 1000 µm, und speziell im Bereich von 2 bis 500 µm, bestimmt mittels Laserlichtbeugung nach ISO 13320:2009-10, aufweisen.

Die eigentliche Durchführung der Aufbauagglomeration kann in Analogie zu den aus dem Stand der Technik bekannten Agglomerationsverfahren erfolgen, die beispielsweise in Wolfgang Pietsch, Agglomeration Processes, Wiley-VCH, 1. Auflage, 2002, in G. Heinze, Handbuch der Agglomerationstechnik, Wiley-VCH, 2000 sowie in Perry's Chemical Engineers' Handbook, 7. Auflage, McGraw-Hill, 1997, 20-73 bis 20-80 beschrieben sind. Hier und im Folgenden werden die Begriffe Aufbauagglomeration und Aufbaugranulierung synonym verwendet.

Die Aufbauagglomeration kann beispielsweise als Rollagglomeration, Mischagglomeration oder Fließbettagglomeration vorgenommen worden. Geeignet sind auch Kombinationen dieser Maßnahmen, z.B. eine Kombination aus Misch- und Rollagglomeration oder eine Kombination aus Roll-, Misch- und Fließbettagglomeration. Vorzugsweise umfasst die erfindungsgemäße Aufbauagglomeration eine Mischagglomeration, welche aus dem Stand der Technik bekannt ist.

Bei der erfindungsgemäßen Granulierung mittels Aufbauagglomeration werden die Partikel des Salzgemischs während des Granulierungsvorgangs in Bewegung versetzt und mit Wasser behandelt. Durch die Anwesenheit des Wassers wird zumindest ein Anlösen der Partikel des Salzgemischs bewirkt, so dass es zu einer Umsetzung des Harnstoffs mit anderen Salzen unter Ausbildung der kristallinen Phase der Formel (I) kommt. Außerdem bewirkt das Wasser, dass die Partikel des Salzgemischs zu größeren Partikeln agglomerieren, da sich durch die Anwesenheit von Wasser Flüssigkeitsbrücken zwischen den Partikeln des Salzgemischs ausbilden können, die zu einer Haftung der Partikel führen. Gleichzeitig wird durch die erzwungene Bewegung der Partikel und die damit eingetragene kinetische Energie größerer Agglomerate die Bildung vergleichsweise einheitlich großer Agglomerate mit kugelförmiger Geometrie gefördert.

In diesem Zusammenhang hat es sich als vorteilhaft erwiesen, wenn man die Aufbauagglomeration so durchführt, dass im Verlauf der Aufbauagglomeration das Reaktionsgemisch zeitweise, insbesondere wenigstens zu Beginn der Aufbauagglomeration, in sämiger und /oder zähflüssiger Form vorliegt.

Weiterhin hat es sich als vorteilhaft erwiesen, wenn die Bestandteile des Salzgemischs zu Beginn der Aufbauagglomeration wenigstens teilweise in gelöster bzw. geschmolzener Form vorliegen. Dies kann durch die Art und Weise der Zugabe des Wassers, die Wahl der Wassermenge und der Temperatur erzielt werden.

Prinzipiell ist es möglich, zumindest eine Teilmenge des Wassers im Verlauf der Aufbauagglomeration zuzugeben. Bevorzugt wird jedoch das Salzgemisch vorgelegt und wenigstens eine Teilmenge, vorzugsweise wenigstens 50 Gew.-%, insbesondere wenigstens 80 Gew.-% und insbesondere die Gesamtmenge des Wassers direkt zu Beginn der Aufbauagglomeration zugegeben.

Weiterhin hat es sich als vorteilhaft erwiesen, wenn die Menge an Wasser so gewählt ist, dass die Gesamtmenge an zugesetztem Wasser 2 bis 7 Gew.-%, bezogen auf die Masse des zur Granulierung eingesetzten Harnstoffs beträgt.

Vorzugsweise erfolgt die Aufbauagglomeration, insbesondere die Mischagglomeration bei Temperaturen im Bereich von 55 bis < 80 °C, insbesondere im Bereich von 65 bis < 80 °C durchgeführt wird. Diese Temperaturangaben beziehen sich auf die Temperatur des Salzgemischs, wie sie beispielsweise mittels eines Infrarot-Sensors gemessen werden kann. Gegebenenfalls kann man das Reaktionsgemisch erwärmen. Gegebenenfalls wird man zu Beginn der Aufbauagglomeration bei einer höheren Temperatur beginnen und im Verlauf der Aufbauagglomeration die Temperatur verringern, wobei auch zu Beginn der Aufbauagglomeration vorzugsweise ein Wert von bis zu < 80 °C eingehalten bzw. nicht überschritten werden sollte.

Bei der Mischagglomeration gibt man das partikuläre, mit wenigstens einer Teilmenge, insbesondere der Hauptmenge und speziell der Gesamtmenge Wasser zuvor befeuchtete Salzgemisch in einen Intensivmischer, speziell in einen Eirich-Mischer, d.h. in einem Intensivmischer-Typ wie er von der Fa. Maschinenfabrik Gustav Eirich GmbH & Co KG vertrieben wird. Ein Intensivmischer weist typischerweise ein Gefäß mit geneigter Drehachse und kreisförmigen Querschnitt auf, das vorzugweise weitere, die Durchmischung fördernde Einbauten, insbesondere wenigstens ein Mischwerkzeug, speziell wenigstens ein rotierendes Mischwerkzeug, und ggf. ein oder mehrere feste Einbauten, z.B. Schaber aufweist. Durch Rotieren des Gefäßes werden die Partikel des Gemischs in Bewegung versetzt und der Granuliervorgang eingeleitet. Beim Befeuchten des Gemischs kommt es in der Regel bereits zur Bildung von unregelmäßig geformten Agglomeraten, die dann bei der Mischagglomeration in regelmäßiger geformte Agglomerate bzw. Granalien umgewandelt werden. Grundsätzlich erfolgt die Mischagglomeration bei den oben genannten Temperaturen. Bei der Mischagglomeration hat es sich als vorteilhaft erwiesen, wenn zu Beginn bei einer höheren Temperatur gearbeitet wird, die vorzugsweise jedoch < 80 °C ist, und im Verlauf der Aufbauagglomeration die Temperatur verringert wird, z.B. um bis zu 25 °C. Vorzugsweise wird während der Mischagglomeration bereits eine Teilmenge des zu Beginn eingesetzten Wassers wieder abgeführt, beispielsweise mittels eines Luftstroms. Besonders bevorzugt wird zumindest ein Teil des im Reaktionsgemisch enthaltenen Wassers durch Verdampfung entfernt.

Für die Durchführung des erfindungsgemäßen Verfahrens und die Qualität der dabei erhältlichen Düngemittelgranulate hat es sich als besonders günstig erwiesen, wenn die Aufbauagglomeration als Mischagglomeration mittels eines Eirich-Mischers durchgeführt wird. Hierbei handelt es sich um eine Granuliervorrichtung, die einen zylindrischen, rotierenden Behälter zur Aufnahme der zu granulierenden Bestandteile aufweist, dessen Rotationsachse gegenüber der Vertikalen geneigt ist, wobei der Behälter wenigstens ein rotierendes, exzentrisch zum Rotationszentrum des Behälters angeordnetes Mischwerkzeug, insbesondere ein rotierendes Mischwerkzeug mit mehreren, an einer rotierenden Welle angeordneten blattförmigen Flügeln und wenigstens einen ex-zentrisch zum Rotationszentrum des Behälters angeordneten Schaber, aufweist. Derartige Granuliervorrichtungen sind bekannt und kommerziell erhältlich, beispielsweise als Eirich Intensivmischer der Fa. Maschinenfabrik Gustav Eirich GmbH & Co. KG, Hardheim, Deutschland.

Dem eigentlichen Granuliervorgang schließt sich häufig eine Reifephase an. Hierzu lässt man das frisch hergestellte Düngemittelgranulat, das im Folgenden auch als grünes Granulat bezeichnet wird, ruhen, d. h. man vermeidet eine stärkere mechanische Belastung und es erfolgt kein weiterer Teilchenaufbau. Hierbei erreicht das Düngemittelgranulat seine eigentliche Festigkeit. Die Reifung erfolgt typischerweise bei erhöhter Temperatur aber vorzugsweise bei Temperaturen unterhalb 80 °C, um eine Umwandlung des Harnstoffs in Biuret zu vermeiden. Vorzugsweise erfolgt die Reifephase bei Temperaturen im Bereich von 40 bis 70 °C. Die Dauer der Reifephase bzw. die Verweilzeit des Granulats in der Reifephase beträgt typischerweise 5 min bis 1 h und insbesondere 10 bis 30 min. Typischerweise lässt man die Granalien während der Reifephase abkühlen. Die Kühlung kann beispielsweise durch einen Lufststrom erfolgen. Hierdurch wird weiteres, beim Erkalten freigesetztes Wasser abtransportiert. Typischerweise wird man so vorgehen, dass man das aus der Granuliervorrichtung ausgetragene grüne Düngemittelgranulat über ein sogenanntes Reifeband zu einer Klassierung oder zu einer Kühlapparatur transportiert. Man kann auch so vorgehen, dass man das noch warme Granulat klassiert und dann die Fraktion mit der gewünschten Korngröße (Gutfraktion bzw. Gutkorn) im Luftstrom trocknet.

In der Regel schließt sich dem eigentlichen Granuliervorgang, d.h. der Aufbauagglomeration und ggf. Trocknung, eine Klassierung des Düngemittelgranulates an. Hierbei erfolgt eine Auftrennung des Granulates in Granulate mit der spezifikationsgerechten Korngröße, kleineren Granulaten, d.h. Feinanteil bzw. Unterkorn, und gegebenenfalls gröberen Granulaten, d.h. Grobanteil bzw. Überkorn. Spezifikationsgerecht ist insbesondere ein Granulat, in dem wenigstens 70 Gew.-%, insbesondere wenigstens 80 Gew.-%, speziell wenigstens 90 Gew.-% der Granulatpartikel eine Korngröße beziehungsweise einen Partikeldurchmesser im Bereich von 2 bis 5 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt. Überraschenderweise können sowohl das Unterkorn wie auch das Überkorn in den Prozess zurückgeführt werden. Das Überkorn wird in der Regel vor der Rückführung auf eine für die Aufbauagglomeration geeignete Partikelgröße aufgemahlen. Es kann jedoch auch einer anderen Anwendung zugeführt werden.

Das so erhaltene spezifikationsgerechte Granulat kann in an sich bekannter Weise konfektioniert, z. B. verpackt und transportiert werden.

Eine typische Anlage zur großtechnischen Herstellung der erfindungsgemäßen Düngemittelgranulate umfasst typischerweise separate Voratsbehälter für Harnstoff und für das kalzinierte Polyhalit, sowie gegebenenfalls ein weiterer Vorratsbehälter für Mikronährstoffe, die über eine gemeinsame Fördervorrichtung, beispielsweise ein Förderband, mit einem Dosierbunker verbunden sind. Zwischen der Fördervorrichtung und dem Dosierbunker kann eine Vorrichtung zum Vorwärmen der Bestandteile der Zusammensetzung, ein sogenannter Vorwärmer, vorgesehen sein. In der Fördervorrichtung und dem gegebenenfalls vorhandenen Vorwärmer findet eine Vermischung der Bestandteile der Zusammensetzung statt. Von dem Dosierbunker wird dann die Zusammensetzung in die Vorrichtung zur Aufbaugranulierung, beispielsweise ein Eirich-Mischer, eingespeist. Die Granuliervorrichtung weist neben einem Mittel zur Einspeisung der Salzzusammensetzung und einem Mittel zum Austrag des Granulats typischerweise Mittel zur Beheizung des Mischers, Mittel zur Kühlung des Mischers, z.B. zum Einführen von Kühlluft, Mittel zur Temperaturkontrolle und Mittel zur Einspeisung von Wasser auf. Das aus der Granuliervorrichtung ausgetragene Granulat wird dann typischerweise auf ein Reifeband gegeben und in eine Klassiervorrichtung transportiert. In der Klassiervorrichtung wird das Granulat in das Gutkorn, d.h. Granalien mit der gewünschten Korngröße, in das Unterkorn, d.h. Granalien mit zu geringer Korngröße, und das Überkorn, d.h. Granalien mit zu großer Korngröße, aufgetrennt. Das Unterkorn wird typischerweise direkt in den Dosierbunker zurückgeführt. Das Überkorn kann als solches in den Dosierbunker zurückgeführt werden. Man kann aber auch das Überkorn aufmahlen und führt dann das vermahlene Überkorn in den Dosierbunker zurück. Das Gutkorn wird typischerweise im Luftstrom gekühlt und dann gegebenenfalls verpackt.

Die nach dem erfindungsgemäßen Verfahren erhältlichen Düngemittelgranulate zeichnen sich durch eine für Düngemittelgranulate ausreichende Festigkeit und damit durch eine geringere Empfindlichkeit gegenüber mechanischer Belastung aus, wie sie beispielsweise beim Ein- oder Ausspeichern oder beim Umschlagen oder Transportieren der Granulate auftreten. Dies äußert sich in einer geringeren Kornzerstörung und einer geringeren Staubbildung durch Abrieb, d.h. von Partikeln mit Korngrößen unterhalb 1 mm. Daher neigen erfindungsgemäß erhaltene Granulate bei der Lagerung, insbesondere unter Druck, wie er in Haufwerken oder bei der Lagerung in Silos auftritt, in geringerem Ausmaß zum Verbacken. Überraschenderweise bleibt die verbesserte mechanische Festigkeit der Granulate auch bei Lagerung über längere Zeiträume erhalten, so dass die beim Ausspeichern bzw. beim Umschlag auftretenden mechanischen Belastungen bei den erfindungsgemäß erhaltenen Granulaten auch nach längerer Lagerung zu einer geringeren Kornzerstörung führen.

Ein weiterer Vorteil der erfindungsgemäßen Düngemittelgranulate besteht darin, dass sie eine geringe NHs-Emission aufweisen, vermutlich weil Bestandteile der Granulate eine Urease-inhibierende Wirkung besitzen. Mit anderen Worten, der in den erfindungsgemäßen Granulaten enthaltene Harnstoff wird weniger stark abgebaut als konventioneller Harnstoff. Daher kann bei Einsatz der erfindungsgemäßen Granulate in Düngemittelanwendungen grundsätzlich auf Ureaseinhibitoren verzichtet oder deren Aufwandmenge verringert werden. Grundsätzlich ist es aber möglich, die erfindungsgemäßen Granulate mit Ureaseinhibitoren zu verwenden.

Des Weiteren betrifft die vorliegende Erfindung auch die Verwendung eines erfindungsgemäßen Düngemittelgranulats als Düngemittel oder in Düngemittelzusammensetzungen. Die Düngemittel und/oder Düngemittelzusammensetzungen können neben dem erfindungsgemäßen Granulat auch weitere düngende Bestandteile haben. Die Düngemittel und/oder Düngemittelzusammensetzungen liegen vorzugsweise in fester Form vor. Bevorzugte Ausführungsformen des Düngemittelgranulats sind die hierin genannten.

Des Weiteren betrifft die vorliegende Erfindung auch ein Verfahren zum Düngen von Böden, umfassend das Aufbringen eines erfindungsgemäßen Düngemittelgranulats auf den zu düngenden Boden. Ebenso können die genannten Düngemittel und/oder Düngemittelzusammensetzungen verwendet werden.

Die folgenden Abbildungen und Beispiele dienen der Erläuterung der Erfindung.

Abbildung 1: Röntgenpulverdiffraktogram einer zerkleinerten Granalie aus Beispiel 1.

Abbildung 2: REM-Darstellung einer repräsentativen Granalie aus Beispiel 1.

Die Berstfeste bzw. Bruchfestigkeit wurde mit Hilfe des Tabletten-Bruchfestigkeitstesters Typ TBH 425D der Firma ERWEKA auf Basis von Messungen an 56 Einzelgranalien unterschiedlicher Partikelgröße (Fraktion 2,5 - 3,15 mm) ermittelt und der Mittelwert berechnet. Bestimmt wurde die Kraft, die erforderlich war, um die Granalie zwi-schen Stempel und Platte des Bruchfestigkeitstesters zu zerbrechen. Granalien mit einer Berstfestigkeit > 400 N und solche mit einer Berstfestigkeit < 4 N wurden bei der Mittelwertbildung nicht berücksichtigt.

Die Werte für den Abrieb wurden mit dem Rolltrommelverfahren nach Busch bestimmt. Hierzu wurden 50 g des Granulats mit einer Korngrößenfraktion von 2,5 - 3,15 mm zusammen mit 70 Stahlkugeln (Durchmesser 10 mm, 283 g) in eine Rolltrommel eines handelsüblichen Abriebtesters, z. B. ERWEKA, Typ TAR 20, gegeben und 10 min bei 40 U*min-1 gedreht. Anschließend wurde der Inhalt der Trommel auf ein Sieb mit einer Maschenweite von 5 mm, unter dem ein Sieb mit einer Maschenweite von 0,5 mm angeordnet war, 1 min auf einer Siebmaschine (Typ Retsch AS 200 control) gesiebt. Der abgesiebte Feinanteil entspricht dem Abrieb.

Röntgenpulverdiffraktometrie: Das jeweilige Granulat wurde mit einem Mörser und einem Stösel zu einem Pulver zerkleinert. Die vermahlenen Granulate wurden anschließend mittels Röntgenpulverdiffraktometrie untersucht. Die Aufnahme der Röntgenpulverdiffraktogramme erfolgte mit einem Bragg-Brentano Prozessdiffraktometer, Typ D 8, der Fa. Endeavor, AXS (298 K, Cu-K_{α}-Strahlung: λ = 1.5413 Ä), Schrittweite: 0,018385738, Schrittdauer: 0,2 Sekunden, Detektor: Lynx Eye, Refelxionsgeometrie im Bereich 2θ = 8°- 70°. Aus ermittelten 2θ Werten wurden die angegebenen Netzabstände berechnet.

Die Bestimmung der Zusammensetzung der Granulate erfolgte nach den folgenden Methoden:
- N-Bestimmung: Verbandsmethode LUFA 11.1, 3.5.2.7 und Verbandsmethode LUFA II,1, 3.9.2*;
- Mg / S Bestimmung: Verbandsmethode LUFA (K+S 0905.01);
- H₂O-Bestimmung durch Karl-Fischer-Titration.

Die Granalien wurden zur Probenvorbereitung für die REM- bzw. EDX-Untersuchung in Epoxidharz eingebettet. Nach Aushärten des Zweikomponentenkunstharzes wurden die Proben mittels Silicium Carbid planar geschliffen. Die Proben wurden nicht mit elektrisch leitenden Schichten bedampft.

Die REM-Aufnahmen wurden mit dem Rasterelektronenmikroskop EVO 50EP der Firma CARL ZEISS SMT (SE detector, VPSE G3 detector, LM4Q BSD) durchgeführt.

Die EDX wurde mit dem Mikroanalysensystem "Noran System Six" mit einem LN2 gekühltem Detektor mit einem Auflösungsvermögen von 129 eV für MnKα der Firma Thermo durchgeführt. Das System ist in das REM integriert.

Als kalzinierter Polyhalit wurde ein Produkt mit folgendem Nährstoffprofil verwendet: 4,31 Gew.-% Magnesium (Gesamtgehalt), 3,78 Gew.-% Magnesium (Gehalt wasserlösliches Magnesium), 20,80 Gew.-% Schwefel, 13,70 Gew.-% Calcium, Gew.-% Kalium, jeweils elementar und in Gewichtsteilen berechnet.

Das Polyhalit wies folgende Korngrößenverteilung auf:

| Durchgang D (%) | d(µm) |
|---|---|
| 10 | 3,55 |
| 20 | 8,95 |
| 30 | 16,54 |
| 40 | 26,67 |
| 50 | 39,28 |
| 60 | 56,42 |
| 70 | 86,07 |
| 80 | 133,4 |
| 90 | 183,6 |
| 95 | 221 |

Als Harnstoff wurde ein handelsüblicher geprillter Harnstoff mit einem Stickstoffgehalt von 46 Gew.-% verwendet, der weniger als 10 Gew.-% Partikel mit einer Korngröße < 5 µm und weniger als 10 Gew.-% Partikel mit einer Korngröße von > 300 µm enthielt (bestimmt mittels Laserlichtbeugung nach ISO 13320:2009-10).

Die im Folgenden beschriebene Granulierung wurde in einem Intensiv-Mischer der Fa. Maschinenfabrik Gustav Eirich GmbH & Co KG (Typ Intensivmischer R01), kurz "Eirich-Mischer" durchgeführt. Der Eirichmischer hatte ein Füllvolumen von 5 L. Pro Herstellung wurden etwa 2 bis 2,5 kg Salzmischung eingesetzt.

### Beispiel 1

In dem Intensiv-Mischer der Fa Eirich wurden 53,5 Gewichtsteile kalzinierter Polyhalit vorgelegt und auf 75 °C erwärmt. Anschließend wurden hierzu 42,7 Gewichtsteile Harnstoff zugegeben und bei einer Drehzahl von 600 U/min für 5 min gemischt, wobei zu Beginn 3,8 Gewichtsteile Wasser im Gegenstrom zugegeben wurden. Hierbei wurde das Gemisch zunehmend flüssig und wies eine sämige Konsistenz auf. Anschließend wurde die Rührgeschwindigkeit auf 100 bis 200 U/min verringert um die Granulatbildung zu fördern. Ab diesem Zeitpunkt wurde die Mischung über einen Zeitraum von 10 min abgekühlt und das bei der Reaktion entstehende überflüssige Wasser mit einem turbulenten Luftstrom ausgetrieben. Bei Temperaturen unter 60 °C erhärtete die Masse unter Bildung eines festen Granulats.

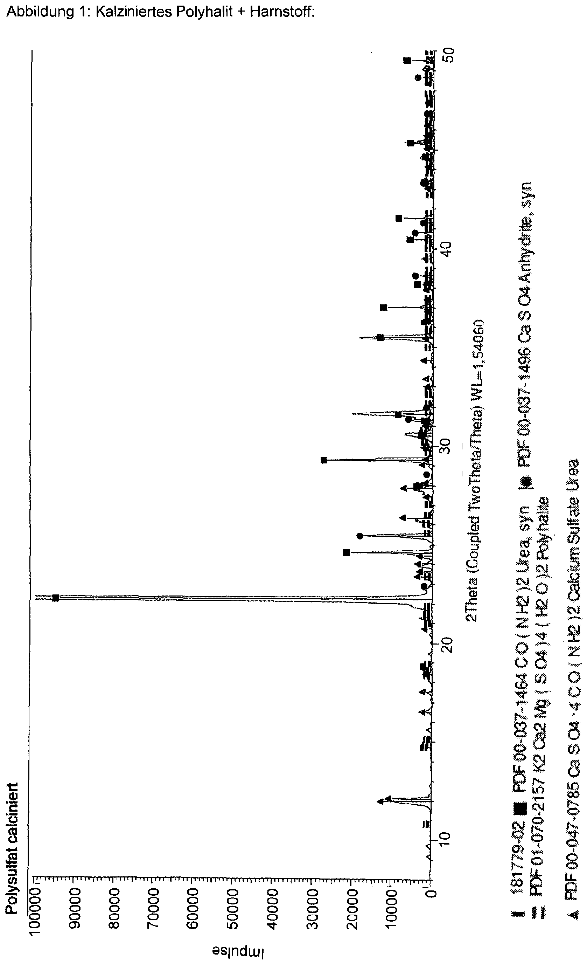

In dem Granulat gemäß Beispiel 1 konnte mittels Röntgenpulverdiffraktometrie die kristalline Phase der Formel (I) nachgewiesen werden. Das Röntgenpulverdiffraktogram ist in Figur 1 gezeigt.

Das Granulat gemäß Beispiel 1 wies folgende mechanische Eigenschaften auf:
- Berstfeste: 21 N
- Abrieb: 0,2 %

Das Granulat gemäß Beispiel 1 hatte folgende Zusammensetzung:
1,76 % Mg (gesamt), 1,54 % Mg (wasserlöslich), 8,49 % S, 25,47 % N, 4,95 % K, 5,54% Ca

Abbildung 1 zeigt ein von zerkleinerten Granalien des Beispiels 1 aufgenommenes Röntgenpulverdiffraktogramm. Anhand der für die jeweilige Phase charakteristischen Reflexe wurde das Vorliegen der kristallinen Phase der Formel (I), Harnstoff, Calciumsulfat-Anhydrit und Polyhalit nachgewiesen.

Hierbei sind die für die jeweilige kristalline Phase charakteristischen Reflexe wie folgt indiziert:
▲ kristallinen Phase der Formel (I)
■ Harnstoff
• Calciumsulfat-anhydrite
= Polyhalite

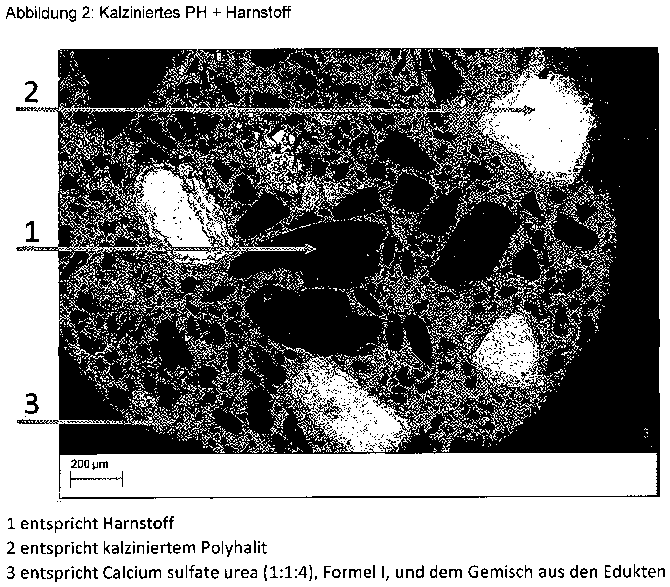

Eine REM-Untersuchung einer Granalie aus Beispiel 1 ergab folgendes Ergebnis - siehe Abbildung 2. Das Korn wies eine regelmäßige Form auf und war ein Konglomerat aus mehreren partikulären Bestandteilen, die in eine Matrix aus einem weiteren Material eingebettet war. Ein Querschnitt ist in Abbildung 2 gezeigt. Die partikulären Bestandteile des Korns sowie die Matrix wurden hinsichtlich ihrer Elementarzusammensetzung mittels EDX analysiert. Die in der Abbildung gleichmäßig dunkel erscheinenden Bestandteile (Pfeil 1) wurden aufgrund der zugehörigen Elementarzusammensetzung als Harnstoff identifiziert. Die weiß erscheinenden partikulären Bestandteile (Pfeil 3) wurden als Polyhalit sowie einem Gemisch der Edukte identifiziert. Die Matrix bestand nur teilweise aus der kristallinen Phase der Formel (I) (Pfeil 2).

## Patentansprüche

1. Düngemittelgranulat, enthaltend Magnesium, Calcium, Kalium, Sulfat und Harnstoff, jeweils bezogen auf das Gesamtgewicht des Granulat, in den folgenden Mengen:
Harnstoff, gerechnet als Stickstoff, in einer Menge von 11,0 bis 33,0 Gew.-%, Magnesium, in einer Menge von 1,0 bis 3,5 Gew.-%,
Calcium, in einer Menge von 3,5 bis 9,0 Gew.-%
Kalium, in einer Menge von 3,4 bis 9,0 Gew.-% und
Sulfat, gerechnet als elementarer Schwefel, in einer Menge von 5,5 bis 15,0 Gew.-%,
wobei wenigstens ein Teil des Calciums, des Harnstoffs und des Sulfats in Form der kristallinen Phase der Formel (I)
CaSO_{4*}4 CO(NH₂)₂ (I)
vorliegt.

2. Düngemittelgranulat nach Anspruch 1, enthaltend Sulfat und Harnstoff in einem solchen Mengenverhältnis, dass das Massenverhältnis von Stickstoff zu Schwefel, im Bereich von 0,8 : 1 bis 5 : 1, insbesondere im Bereich von 1 : 1 bis 4,5 : 1 liegt.

3. Düngemittelgranulat nach Anspruch 1 oder 2, worin wenigstens 80 Gew.-% des Magnesium, Calciums und Kaliums in Form sulfatischer Salze vorliegt.

4. Düngemittelgranulat nach einem der vorhergehenden Ansprüche, worin das Magnesium zumindest teilweise in Form von Polyhalit vorliegt.

5. Düngemittelgranulat nach einem der vorhergehenden Ansprüche, worin 0,1 bis 12 Gew.-% des Magnesiums, bezogen auf die Gesamtmenge des im Düngemittelgranulat enthaltenen Magnesiums, in Form von wasserunlöslichen Magnesiumsalzen vorliegt.

6. Düngemittelgranulat nach einem der vorhergehenden Ansprüche, wobei wenigstens ein Teil des Harnstoffs in den Granulatpartikeln in Form von Harnstoffpartikeln vorliegt, die in eine Matrix sulfatischer Salze des Magnesiums, Calciums und Kaliums eingebettet sind.

7. Düngemittelgranulat nach einem der vorhergehenden Ansprüche, das wenigstens eines der folgenden Merkmale (i) - (iii) aufweist:
(i) Wenigstens 70 Gew.-% der Partikel des Düngemittelgranulats weisen eine Teilchengröße im Bereich von 2 bis 5 mm auf;
(ii) Die Gesamtmenge an Magnesium, Kalium, Calcium, Sulfat und Harnstoff machen wenigstens 80 Gew.-%, bezogen auf die Gesamtmasse des Düngemittelgranulats, abzüglich des etwaig darin enthaltenen Wassers, aus;
(iii) Das Düngemittelgranulat enthält zusätzlich einen Mikronährstoff aus der Gruppe Bor, Mangan, Zink, Kupfer, Eisen und Molybdän, vorzugsweise in einer Gesamtmenge von 0,1 bis 5,0 Gew.-%, bezogen auf die Gesamtmasse des Düngemittelgranulats.

8. Verfahren zur Herstellung eines Düngemittelgranulats nach einem der vorhergehenden Ansprüche, bei dem ein Salzgemisch enthaltend kalziniertes Polyhalit und Harnstoff unter Zusatz von Wasser einer Aufbauagglomeration, insbesondere einer Mischagglomeration unterworfen wird.

9. Verfahren nach Anspruch 8, wobei das Salzgemisch zu wenigstens 80 Gew.-% bezogen auf die Gesamtmasse des Salzgemischs, abzüglich des etwaig darin enthaltenen Wassers, aus kalziniertem Polyhalit und Harnstoff besteht.

10. Verfahren nach einem der Ansprüche 8 oder 9, wobei die Aufbauagglomeration als Mischagglomeration mittels eines Intensivmischers, insbesondere eines Eirich-Mischers erfolgt.

11. Verfahren nach einem der Ansprüche 8 bis 10, wobei die Aufbauagglomeration bei einer Temperatur im Bereich von 55 bis < 80°C, insbesondere im Bereich von 65 bis < 80°C durchgeführt wird.

12. Verfahren nach einem der Ansprüche 8 bis 11, wobei man die Hauptmenge an Wasser zu Beginn der Aufbauagglomeration zum Salzgemisch gibt.

13. Verfahren nach einem der Ansprüche 8 bis 12, wobei die Menge an Wasser so gewählt ist, dass die Gesamtmenge an zugesetztem Wasser 2 bis 7 Gew.-%, bezogen auf die Masse des zur Granulierung eingesetzten Harnstoffs beträgt.

14. Verfahren nach einem der Ansprüche 8 bis 13, das wenigstens eines der folgenden Merkmale (iv) oder (v) aufweist:
(iv) Die Aufbauagglomeration wird so durchführt, dass im Verlauf der Aufbauagglomeration das Reaktionsgemisch zeitweise in sämiger Form vorliegt;
(v) Während der Aufbauagglomeration wird zumindest ein Teil des im Reaktionsgemisch enthaltenen Wassers durch Verdampfung entfernt.

15. Verwendung eines Düngemittelgranulats nach einem der Ansprüche 1 bis 7 als Düngemittel oder in Düngemittelzusammensetzungen.

## Claims

1. Fertilizer granules comprising magnesium, calcium, potassium, sulfate and urea, based in each case on the total weight of the granules, in the following amounts:
urea, calculated as nitrogen, in an amount from 11.0% to 33.0% by weight,
magnesium, in an amount from 1.0% to 3.5% by weight, calcium, in an amount from 3.5% to 9.0% by weight, potassium, in an amount from 3.4% to 9.0% by weight, and
sulfate, calculated as elemental sulfur, in an amount from 5.5% to 15.0% by weight,
where at least part of the calcium, of the urea and of the sulfate is present in the form of the crystalline phase of the formula (I)
CaSO₄*4 CO(NH₂)₂ (I) .

2. Fertilizer granules according to claim 1, comprising sulfate and urea in a proportion such that the mass ratio of nitrogen to sulfur is in the range from 0.8:1 to 5:1, more particularly in the range from 1:1 to 4.5:1.

3. Fertilizer granules according to claim 1 or 2, wherein at least 80% by weight of the magnesium, calcium and potassium is present in the form of sulfatic salts.

4. Fertilizer granules according to any of the preceding claims, wherein the magnesium is present at least partly in the form of polyhalite.

5. Fertilizer granules according to any of the preceding claims, wherein 0.1% to 12% by weight of the magnesium, based on the total amount of the magnesium present in the fertilizer granules, is present in the form of water-insoluble magnesium salts.

6. Fertilizer granules according to any of the preceding claims, where at least part of the urea in the granule particles is present in the form of urea particles embedded in a matrix of sulfatic salts of magnesium, of calcium and of potassium.

7. Fertilizer granules according to any of the preceding claims, having at least one of the following features (i) - (iii):
(i) at least 70% by weight of the particles of the fertilizer granules have a particle size in the range from 2 to 5 mm;
(ii) the total amount of magnesium, potassium, calcium, sulfate and urea accounts for at least 80% by weight, based on the total mass of the fertilizer granules, minus the water possibly present therein;
(iii) the fertilizer granules further comprise a micronutrient from the group of boron, manganese, zinc, copper, iron and molybdenum, preferably in a total amount of 0.1% to 5.0% by weight, based on the total mass of the fertilizer granules.

8. Process for producing fertilizer granules according to any of the preceding claims, wherein a salt mixture comprising calcined polyhalite and urea is subjected with addition of water to a buildup agglomeration, more particularly a mixed agglomeration.

9. Process according to claim 8, where the salt mixture consists to an extent of at least 80% by weight, based on the total mass of the salt mixture, minus the water possibly present therein, of calcined polyhalite and urea.

10. Process according to either of claims 8 and 9, where the buildup agglomeration takes place as mixed agglomeration by means of an intensive mixer, more particularly an Eirich mixer.

11. Process according to any of claims 8 to 10, where the buildup agglomeration is carried out at a temperature in the range from 55 to < 80°C, more particularly in the range from 65 to < 80°C.

12. Process according to any of claims 8 to 11, where the major amount of water is added to the salt mixture at the start of the buildup agglomeration.

13. Process according to any of claims 8 to 12, where the amount of water is chosen such that the total amount of added water is 2% to 7% by weight, based on the mass of the urea used for granulation.

14. Process according to any of claims 8 to 13, having at least one of the following features (iv) or (v):
(iv) the buildup agglomeration is carried out such that in the course of the buildup agglomeration the reaction mixture is present temporarily in creamy form;
(v) during the buildup agglomeration at least part of the water present in the reaction mixture is removed by evaporation.

15. Use of fertilizer granules according to any of claims 1 to 7 as fertilizer or in fertilizer compositions.

## Revendications

1. Granulat d'engrais, contenant du magnésium, du calcium, du potassium, du sulfate et de l'urée, à chaque fois par rapport au poids total du granulat, dans les quantités suivantes :
urée, exprimée en azote, en une quantité de 11,0 à 33,0% en poids,
magnésium, en une quantité de 1,0 à 3,5% en poids, calcium, en une quantité de 3,5 à 9,0% en poids, potassium, en une quantité de 3,4 à 9,0% en poids et
sulfate, exprimé en soufre élémentaire, en une quantité de 5,5 à 15,0% en poids,
au moins une partie du calcium, de l'urée et du sulfate se trouvant sous forme de la phase cristalline de formule (I)
CaS0₄*4CO(NH₂)₂ (I)

2. Granulat d'engrais selon la revendication 1, contenant du sulfate et de l'urée dans un rapport de quantités tel que le rapport massique d'azote à soufre se situe dans la plage de 0,8:1 à 5:1, en particulier dans la plage de 1:1 à 4,5:1.

3. Granulat d'engrais selon la revendication 1 ou 2, dans lequel au moins 80% en poids du magnésium, du calcium et du potassium se trouvent sous forme de sels sulfatés.

4. Granulat d'engrais selon l'une quelconque des revendications précédentes, dans lequel le magnésium se trouve au moins partiellement sous forme de polyhalite.

5. Granulat d'engrais selon l'une quelconque des revendications précédentes, dans lequel 0,1 à 12% en poids du magnésium, par rapport à la quantité totale du magnésium contenu dans le granulat d'engrais, se trouvent sous forme de sels insolubles dans l'eau du magnésium.

6. Granulat d'engrais selon l'une quelconque des revendications précédentes, au moins une partie de l'urée dans les particules de granulat se trouvant sous forme de particules d'urée qui sont incorporées dans une matrice de sels sulfatés de magnésium, de calcium et de potassium.

7. Granulat d'engrais selon l'une quelconque des revendications précédentes, qui présentent au moins l'une des caractéristiques (i)-(iii) suivantes :
(i) au moins 70% en poids des particules du granulat d'engrais présentent une grosseur de particule dans la plage de 2 à 5 mm ;
(ii) la quantité totale de magnésium, de potassium, de calcium, de sulfate et d'urée représente au moins 80% en poids, par rapport à la masse totale du granulat d'engrais, déduction faite de l'eau qui y est éventuellement contenue ;
(iii) le granulat d'engrais contient en outre un oligoélément du groupe constitué par le bore, le manganèse, le zinc, le cuivre, le fer et le molybdène, de préférence en une quantité totale de 0,1 à 5,0% en poids, par rapport à la masse totale du granulat d'engrais.

8. Procédé pour la préparation d'un granulat d'engrais selon l'une quelconque des revendications précédentes, dans lequel un mélange de sels contenant de la polyhalite calcinée et de l'urée est soumis avec addition d'eau à une agglomération progressive, en particulier à une agglomération de mélange.

9. Procédé selon la revendication 8, le mélange de sels étant constitué, à raison d'au moins 80% en poids, par rapport à la masse totale du mélange de sels, déduction faite de l'eau qui y est éventuellement continue, de polyhalite calcinée et d'urée.

10. Procédé selon l'une quelconque des revendications 8 ou 9, l'agglomération progressive sous forme d'agglomération de mélange ayant lieu au moyen d'un mélangeur intensif, en particulier d'un mélangeur de la société Eirich.

11. Procédé selon l'une quelconque des revendications 8 à 10, l'agglomération progressive étant réalisée à une température dans la plage de 55 à <80°C, en particulier dans la plage de 65 à <80°C.

12. Procédé selon l'une quelconque des revendications 8 à 11, la quantité principale d'eau étant ajoutée au mélange de sels au début de l'agglomération progressive.

13. Procédé selon l'une quelconque des revendications 8 à 12, la quantité d'eau étant choisie de manière telle que la quantité totale d'eau ajoutée est de 2 à 7% en poids, par rapport à la masse de l'urée utilisée pour la granulation.

14. Procédé selon l'une quelconque des revendications 8 à 13, qui présente au moins l'une des caractéristiques (iv) ou (v) suivantes :
(iv) l'agglomération progressive est réalisée de manière telle qu'au cours de l'agglomération progressive, le mélange réactionnel se trouve temporairement sous forme épaisse :
(v) pendant l'agglomération progressive, au moins une partie de l'eau contenue dans le mélange réactionnel est éliminée par évaporation.

15. Utilisation d'un granulat d'engrais selon l'une quelconque des revendications 1 à 7 comme engrais ou dans des compositions d'engrais.
